# EUROPEAN PATENT SPECIFICATION

(11) **EP 3 362 370 B1**
(45) Date of publication and mention of the grant of the patent: **26.10.2022**
(21) Application number: 16791715.2
(22) Date of filing: 11.10.2016
(51) Int. Cl.: B65D 1/00, B32B 1/02, C08G 81/02, C08L 87/00, C08F 255/00, C08F 210/02, C08F 222/06, C08F 8/32, C08F 8/48, B32B 27/28, B32B 27/08, B65D 1/02, B65D 23/04, C08F 255/02, B32B 27/32, B29C 49/22, B29K 86/00, B29K 23/00, C08J 5/18

(54) **PACKAGES FOR IMPROVED RELEASE OF FLOWABLE PRODUCTS**
VERPACKUNGEN FÜR VERBESSERTE FREISETZUNG VON FLÜSSIGKEITEN
EMBALLAGES PERMETTANT UNE LIBÉRATION AMÉLIORÉE DE LIQUIDES

(30) Priority: 14.10.2015 US 201562241329 P
(43) Date of publication of application: 22.08.2018
(73) Proprietor: Dow Global Technologies LLC, Midland, MI 48674 (US); Rohm and Haas Company, Philadelphia, PA 19106-2399 (US)
(72) Inventor: EVANS, Jessica P., Duncan, SC 29334 (US); KALIHARI, Vivek, Freeport, TX 77541 (US); HARRIS, William J., Lake Jackson, TX 77566 (US); BISHOP, Matthew T., Midland, MI 48674 (US); READ, Michael D., Monroe, WA 98272 (US)
(74) Representative: Boult Wade Tennant LLP
(86) International application number: PCT/US2016/056332
(87) International publication number: WO 2017/066141

(56) References cited:
- EP-A1- 2 208 604
- WO-A1-2016/069075
- US-A1- 2001 039 312
- DATABASE CA [Online] CHEMICAL ABSTRACTS SERVICE, COLUMBUS, OHIO, US; 15 September 2011 (2011-09-15), HARADA, AKIRA ET AL: "Polyolefin laminates and packaging materials using them with excellent light-shielding and gas-barrier properties", XP002766409, retrieved from STN Database accession no. 2011:1158719 -& JP 2011 177992 A (MITSUBISHI CHEM CORP) 15 September 2011 (2011-09-15)
- DATABASE WPI Week 199419 1994 Thomson Scientific, London, GB; AN 1994-156266 XP002766410, -& JP H06 99481 A (TOPPAN PRINTING CO LTD) 12 April 1994 (1994-04-12)

## Description

### Field

The present invention relates to packages having inner surfaces that facilitate the release of flowable products such as liquids.

### Background

Product retention in packaging in various applications such as personal care, food, beverage, and household products results in product waste and lessens consumer value. Improved product release can result in less product waste as well as less container waste. Furthermore, improved product release characteristics could reduce recycling costs where retained products must be removed prior to recycling. In addition, improved product release characteristics would give product manufacturers more formulation flexibility, allowing them to introduce more viscous and/or higher solids products. There remains a need for packages having improved product release characteristics and other properties.

US-A-2001/0039312 discloses a compound comprised of polypropylene and the reaction product of maleated polypropylene and polyether amine.

### Summary

The present invention advantageously provides packages that provide desirable release or evacuation of products (e.g., liquids) contained therein. Packages that provide improved release of products can result in a number of advantages. For example, in some embodiments, packages of the present invention can provide a reduction in waste, value to consumers due to the retrieval of more product from the package, reduction in recycling costs, and other advantages.

In one embodiment, a package of the present invention comprises a multilayer structure having an inner layer comprising an inner surface, wherein the inner layer comprises a polyalkylene ether modified polyethylene, wherein the inner layer comprises at least 30 wt% by weight of the polyalkylene ether modified polyethylene based on the weight of the inner layer. In one embodiment, the polyalkylene ether modified polyethylene comprises: 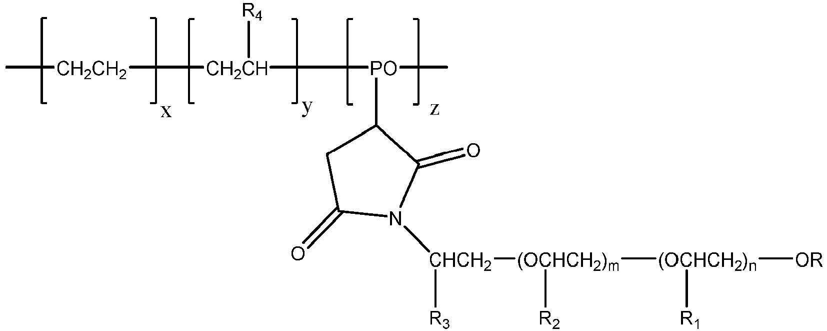 where R, R₁, R₂, R₃, and R₄ independently comprise H or alkyl, where PO represents an olefin or alpha olefin monomer repeat unit, where x +y + z = 100 mole percent, and where n + m = 100 mole percent. In some embodiments, x ranges from at least 83 mole % to 99.5 mole %, y ranges from at least 0.5 mole % to 13 mole %, and z ranges from at least 0.025 mole % to 4.25 mole %. In some embodiments, both R and R₂ are independently alkyl groups and R₁ is H, and n is at least 50 mole % and, in some embodiments, n is at least 75 mole %. When R₁ is not the same as R₂, the polyalkylene ether functional group is a copolymer, and the copolymer can be a random copolymer, a block copolymer, or a segmented copolymer (including mixtures thereof). In some such embodiments, R₁ is H, R₂ is an alkyl group, and n is at least 50 mole %.

In some embodiments, packages of the present invention can provide improved release of complex fluids as discussed further herein.

These and other embodiments are described in more detail in the Detailed Description.

### Brief Description of Drawings

FIG. 1 shows an adjustable test platform for conducting fluid flow tests.
FIG. 2 shows a system for adjusting the angle of the test platform in FIG. 1.
FIG. 3 illustrates the placement of cat food on the adjustable test platform covered with a film at the outset of a fluid flow test.

### Detailed Description

Unless specified otherwise herein, percentages are weight percentages (wt%) and temperatures are in °C.

The term "composition," as used herein, includes material(s) which comprise the composition, as well as reaction products and decomposition products formed from the materials of the composition.

The terms "comprising," "including," "having," and their derivatives, are not intended to exclude the presence of any additional component, step or procedure, whether or not the same is specifically disclosed. In order to avoid any doubt, all compositions claimed through use of the term "comprising" may include any additional additive, adjuvant, or compound, whether polymeric or otherwise, unless stated to the contrary. In contrast, the term, "consisting essentially of" excludes from the scope of any succeeding recitation any other component, step or procedure, excepting those that are not essential to operability. The term "consisting of" excludes any component, step or procedure not specifically delineated or listed.

"Polymer" means a polymeric compound prepared by polymerizing monomers, whether of the same or a different type. The generic term polymer thus embraces the term homopolymer (employed to refer to polymers prepared from only one type of monomer, with the understanding that trace amounts of impurities can be incorporated into the polymer structure), and the term interpolymer as defined hereinafter. Trace amounts of impurities (for example, catalyst residues) may be incorporated into and/or within the polymer. A polymer may be a single polymer, a polymer blend or polymer mixture.

The term "interpolymer," as used herein, refers to polymers prepared by the polymerization of at least two different types of monomers. The generic term interpolymer thus includes copolymers (employed to refer to polymers prepared from two different types of monomers), and polymers prepared from more than two different types of monomers.

The terms "olefin-based polymer" or "polyolefin", as used herein, refer to a polymer that comprises, in polymerized form, a majority amount of olefin monomer, for example ethylene or propylene (based on the weight of the polymer), and optionally may comprise one or more comonomers.

The term, "ethylene-based polymer," as used herein, refers to a polymer that comprises, in polymerized form, a majority amount of ethylene monomer (based on the weight of the polymer), and optionally may comprise one or more comonomers.

The term, "ethylene/α-olefin interpolymer," as used herein, refers to an interpolymer that comprises, in polymerized form, a majority amount of ethylene monomer (based on the weight of the interpolymer), and an α-olefin.

The term, "ethylene/α-olefin copolymer," as used herein, refers to a copolymer that comprises, in polymerized form, a majority amount of ethylene monomer (based on the weight of the copolymer), and an α-olefin, as the only two monomer types.

"Polyethylene" or "ethylene-based polymer" shall mean polymers comprising greater than 50% by weight of units which have been derived from ethylene monomer. This includes polyethylene homopolymers or copolymers (meaning units derived from two or more comonomers). Common forms of polyethylene known in the art include Low Density Polyethylene (LDPE); Linear Low Density Polyethylene (LLDPE); Ultra Low Density Polyethylene (ULDPE); Very Low Density Polyethylene (VLDPE); single-site catalyzed Linear Low Density Polyethylene, including both linear and substantially linear low density resins (m-LLDPE); Medium Density Polyethylene (MDPE); and High Density Polyethylene (HDPE). These polyethylene materials are generally known in the art; however, the following descriptions may be helpful in understanding the differences between some of these different polyethylene resins.

The term "LDPE" may also be referred to as "high pressure ethylene polymer" or "highly branched polyethylene" and is defined to mean that the polymer is partly or entirely homopolymerized or copolymerized in autoclave or tubular reactors at pressures above 100 MPa (14,500 psi) with the use of free-radical initiators, such as peroxides (see for example US 4,599,392). LDPE resins typically have a density in the range of 0.916 to 0.935 g/cm³.

The term "LLDPE", includes both resin made using the traditional Ziegler-Natta catalyst systems as well as single-site catalysts, including, but not limited to, bis-metallocene catalysts (sometimes referred to as "m-LLDPE") and constrained geometry catalysts, and includes linear, substantially linear or heterogeneous polyethylene copolymers or homopolymers. LLDPEs contain less long chain branching than LDPEs and includes the substantially linear ethylene polymers which are further defined in U.S. Patent 5,272,236, U.S. Patent 5,278,272, U.S. Patent 5,582,923 and US Patent 5,773,155; the homogeneously branched linear ethylene polymer compositions such as those in U.S. Patent No. 3,645,992; the heterogeneously branched ethylene polymers such as those prepared according to the process disclosed in U.S. Patent No. 4,076,698; and/or blends thereof (such as those disclosed in US 3,914,342 or US 5,844,045). The LLDPEs can be made via gas-phase, solution-phase or slurry polymerization or any combination thereof, using any type of reactor or reactor configuration known in the art.

The term "MDPE" refers to polyethylenes having densities from 0.926 to 0.935 g/cm³. "MDPE" is typically made using chromium or Ziegler-Natta catalysts or using single-site catalysts including, but not limited to, bis-metallocene catalysts and constrained geometry catalysts, and typically have a molecular weight distribution ("MWD") greater than 2.5.

The term "HDPE" refers to polyethylenes having densities greater than about 0.935 g/cm3, which are generally prepared with Ziegler-Natta catalysts, chrome catalysts or single-site catalysts including, but not limited to, bis-metallocene catalysts and constrained geometry catalysts.

The term "ULDPE" refers to polyethylenes having densities of 0.880 to 0.912 g/cm³, which are generally prepared with Ziegler-Natta catalysts, chrome catalysts, or single-site catalysts including, but not limited to, bis-metallocene catalysts and constrained geometry catalysts.

The term "multilayer structure" refers to any structure comprising two or more layers having different compositions and includes, without limitation, multilayer films, multilayer sheets, laminated films, multilayer rigid containers, multilayer pipes, and multilayer coated substrates.

As used herein, the term "inner product facing surface" means the surface which is in contact with product in a package, when a monolayer structure or multilayer structure is formed into a package and filled with product.

Unless otherwise indicated herein, the following analytical methods are used in the describing aspects of the present invention:
Melt index: Melt indices I₂ (or I₂) and I₁₀ (or I₁₀) are measured in accordance to ASTM D-1238 at 190° C and at 2.16 kg and 10 kg load, respectively. Their values are reported in g/10 min.
Density: Samples for density measurement are prepared according to ASTM D4703. Measurements are made, according to ASTM D792, Method B, within one hour of sample pressing.

The term molecular weight distribution or "MWD" is defined as the ratio of weight average molecular weight to number average molecular weight (M_{w}/Mₙ). M_{w} and Mₙ are determined according to methods known in the art using conventional gel permeation chromatography (conventional GPC).

As used herein, the term "small scale root mean square roughness" refers to the root mean square roughness measured by atomic force microscopy using a sample size of 25 square µm (microns). Samples are mounted onto a glass slide using double-sided tape. Four areas are analyzed on each sample. PeakForce tapping mode is obtained on a Dimension Icon (Bruker) using a Nanoscope V controller (software v 8.10b47). A ScanAsyst Air probe (Bruker Corporation) is used for all images (resonant frequency: 70 kHz; spring constant: 0.4 N/m). All images are obtained with a set point of 0.05 V and a peak force engage set point of 0.15 V. Images are collected over a 5 µm × 5 µm area with 1024 × 1024 resolution at a scan rate of 0.48 Hz. Images are post-processed using SPIP v.5.1.11 (Image Metrology). An average profile fit with a LMS Fit Degree of zero is applied to all images. Noise is removed with a Median_3x3_1_HighandLow_Circle filter. Surface roughness is averaged over four areas on each sample and reported for Sq (root mean square). The average value is reported.

As used herein, the term "large scale root mean square roughness" refers to the root mean square roughness measured using laser scanning microscopy on a sample size of 372240 square µm (microns). All samples are analyzed as received over five areas. CLSM is obtained with a Keyence VK-9700 microscope (application viewer VK-H1 V1E) with a 20x objective lens and superfine resolution. All areas analyzed are 705 µm × 528 µm. All images are post-processed and analyzed using VK Analyzer Plus v.2.4.0.0 (Keyence). Images are plane fit and flattened using a tilt correction function, and noise was removed by a normal height cut level filter. Surface roughness measurements are calculated across all height images for each sample and averaged together using SPIP v.5.1.11 (Image Metrology) and reported in Sq (root mean square). Prior to analysis, images are plane flattened with the z-offset mean set to zero.

Additional properties and test methods are described further herein.

The present invention relates generally to packages having improved product release properties. In some embodiments, the present invention advantageously incorporates certain resins in an inner surface of a package that results in the package exhibiting improved release of complex fluids such as personal care products (e.g., lotions, shampoos, body wash, etc.), consumer goods, food, pet food, and other products. Release of complex fluids can be considered in terms of efficient release and quick release. In general, an efficient release application is typically one where a product is used over a period of time and product is released from the package multiple times. Non-limiting examples of efficient release applications are packages for shampoo, body lotions, conditioners, and the like. A quick release application is typically one where the product is used a single time such that the product is released from the package once. Non-limiting examples of quick release applications include pet food, oils, salad dressing, liquid detergent pouches, and the like. While some embodiments of the packages of the present invention are better suited for efficient release applications, such embodiments, or other embodiments, may also be used in quick release applications.

Some embodiments of packages of the present invention are characterized based on their ability to release complex fluids. As used herein, a "complex fluid" is a fluid having a yield stress of at least 5 Pa and a viscosity of at least 10 Pa·s at a strain rate of 1 s⁻¹, when determined according to the following procedure: The yield stress of the fluid is determined using an MCR301 rheometer from Anton Paar GmbH (Austria). The instrument is equipped with stainless steel parallel plates of 50 mm diameter. The gap used is 400 or 500 µm. Once loaded into the instrument, the sample is covered with a solvent trap to avoid loss of moisture. The temperature is controlled at 23 °C using Peltier heating elements. The sample is subjected to an upward stress ramp from 1 Pa to 100 Pa, followed by a downward stress ramp from 100 Pa to
1 Pa. The stress is increased and decreased linearly with a ramp rate of 100 Pa/min. A measurement is taken every 2 s. To quantify the value of the yield stress, a Herschel-Bulkley model is fitted with the data from the downward stress ramp using Rheoplus V3.61 software. The viscosity at 1 s⁻¹ is determined from this data set.

Improved product release from packages can provide a number of advantages. With such improved release, a consumer or other user can remove and/or use more of the product that was originally provided in the package. To the extent residual product needs to be removed prior to recycling, some embodiments of the present invention can reduce recycling costs as less amount of residual product will need to be removed from the package. As another potential benefit, with some embodiments, a product manufacturer may have more formulation flexibility with its products (e.g., potential use of more viscous products or products with higher solids content).

Packages of the present invention generally include any type of container configured to hold complex fluids. Such packages are typically multilayer structures that can be prepared by blow molding, injection molding, compression molding, rotomolding, multilayer molding/extrusion processes, inject-over-inject molding processes, and others. Such packages can be in a variety of forms including, for example, bottles, pouches, cups, containers, and others from which a fluid can flow. Some particularly useful embodiments of the present invention are rigid packages.

An inner surface of the package is in contact with the complex fluid or other product in the package. When the package is a multilayer structure, the inner surface is part of an inner layer of the multilayer structure, again with the inner surface being in contact with the complex fluid or other product. In some embodiments, the package is a rigid package.

The package may comprise one embodiment as disclosed herein, or a combination of two or more embodiments.

In one embodiment, a package of the present invention comprises a multilayer structure having an inner layer comprising an inner surface, wherein the inner layer comprises a polyalkylene ether modified polyethylene. The polyalkylene ether modified polyethylene, in some embodiments, comprises an imide moiety.

In some embodiments, the polyalkylene ether modified polyethylene is the reaction product of a maleated polyethylene and an amine terminated polyalkylene ether. In some such embodiments, the maleated polyethylenecomprises a maleic anhydride grafted polyethylene. The polyethylene, in some such embodiments, comprises low density polyethylene or linear low density polyethylene. In some embodiments, the maleated polyethylenecomprises a maleated polyethylene plastomer. In some embodiments, the maleated polyethylene comprises a copolymer comprising ethylene and maleic anhydride. In some embodiments where the maleated polyethylene comprises maleic anhydride, the maleated polyethylene comprises up to 10 weight percent maleic anhydride based on the weight of maleated polyethylene.

In some embodiments where the polyalkylene ether modified polyethylene is the reaction product of a maleated polyethylene and an amine terminated polyalkylene ether, the amine terminated polyalkylene ether comprises a monoamine terminated polyalkylene ether. In some such embodiments, the molecular weight of the amine terminated polyalkylene ether is between 250 and 15,000. In some such embodiments, the molar ratio of amine in the amine terminated polyalkylene ether to the maleic anhydride or maleic acid in the maleated polyethyleneis 0.05 to 5.

In some embodiments, the polyalkylene ether modified polyethylenecomprises the following compound: 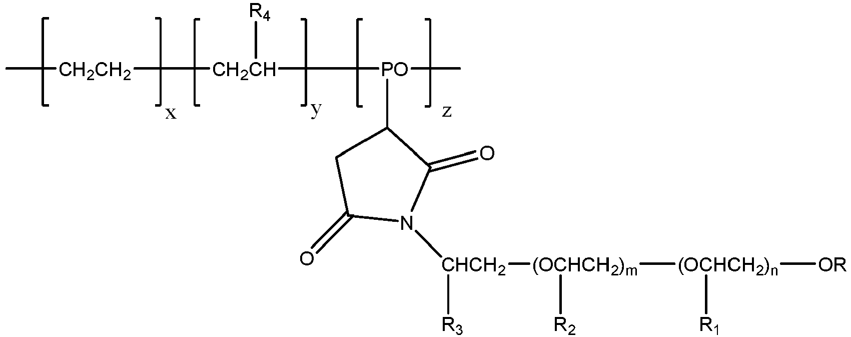 where R, R₁, R₂, R₃, and R₄ independently comprise H or alkyl, where PO represents an olefin or alpha olefin monomer repeat unit, where x +y + z = 100 mole %, and where n + m = 100 mole %. In some embodiments, x ranges from at least 83 mole % to 99.5 mole %, y ranges from at least 0.5 mole % to 13 mole %, and z ranges from at least 0.025 mole % to 4.25 mole %. In other embodiments, x ranges from at least 86 mole % to 98 mole %. In other embodiments, x ranges from at least 87 mole % to 95 mole %. In some embodiments, when R₄ is an alkyl group, y ranges from at least 0.5 mole % to 13 mole %. In other embodiments, when R₄ is an alkyl group, y ranges from at least 2.5 mole% to 13 mole %. In some embodiments, when R4 is an alkyl group, y ranges from at least 5 mole% to 13 mole%. In other embodiments, z ranges from at least 0.070 mole % to 2.10 mole %. In some embodiments, z ranges from at least 0.070 mole % to 1.00 mole %. In other embodiments, z ranges from at least 0.14 mole % to 0.40 mole % .

In some embodiments, both R and R₂ are independently alkyl groups and R₁ is H, n is at least 50 mole % and in some embodiments, n is at least 75 mole %. When R₁ is not the same as R₂, the polyalkylene ether functional group is a copolymer, and the copolymer can be either a random copolymer, a block copolymer, or a segmented copolymer (including mixtures thereof). In some such embodiments, R₁ is H, R₂ is an alkyl group, and n is at least 50 mole %. In some embodiments, R₄ is -CH₂CH₃. In some embodiments, R₄ is -CH-₂CH₂CH₂CH₃. In some embodiments, R₄ is -CH₂CH₂CH₂CH₂CH₂CH₃.

In some embodiments, the polyalkylene ether modified polyethylene comprises the following compound: 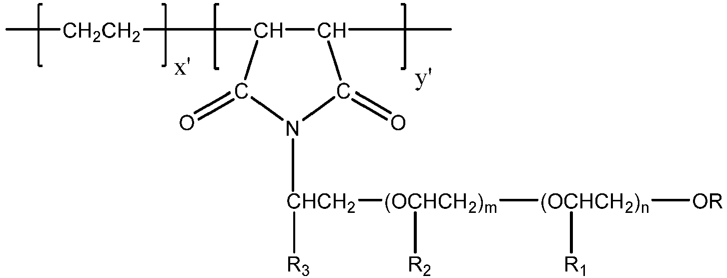 where R, R₁, R₂, and R₃ independently comprise H or alkyl, where x' +y' = 100 mole %, and where n + m = 100 mole %. In some embodiments, both R and R₂ are independently alkyl groups and R₁ is H, n is at least 50 mole % and in some embodiments, n is at least 75 mole %. When R₁ is not the same as R₂, the polyalkylene ether functional group is a copolymer, and the copolymer can be either a random copolymer, a block copolymer, or a segmented copolymer (including mixtures thereof). In some such embodiments, R₁ is H, R₂ is an alkyl group, and n is at least 50 mole %.

In some embodiments, the package comprises an interior volume, and further comprises a flowable product in the interior volume. In some embodiments, the flowable product is a liquid. The flowable product, in some embodiments, is a food product. In some embodiments, the flowable product is a body care product.

In some embodiments, a package of the present invention exhibits less product retention than a comparative package of the same size and shape when the comparative package does not include the inner surface.

As noted above, packages of the present invention have a multilayer structure having an inner layer comprising an inner surface, wherein the inner layer comprises a polyalkylene ether modified polyethylene. Polyethylene is modified with polyalkylene ether. Such polyethylenes can be hompolymers, random copolymers, or block copolymers in various embodiments.

In some embodiments, the polyethylene that is modified with polyalkylene ether is a maleated polyethylene. Such maleated polyethylenes can be homopolymers, random copolymers, or block copolymers.

In some embodiments, the maleated polyethylene comprises maleic anhydride radically grafted on to the polyethylene. In some embodiments, the maleated polyethylene comprises maleic anhydride radically copolymerized with the polyethylene. The maleated polyethylenes regardless of whether maleic anhydride is grafted on or copolymerized with the polyethylene, in some embodiments, comprise up to 10 weight percent maleic acid/maleic anhydride based on the total weight of the maleated polyethylene. In some embodiments, the maleated polyethylenes comprise 0.1 to 10 weight percent maleic acid/maleic anhydride based on the total weight of the maleated polyethylene. All individual values and subranges from 0.1 to 10 percent by weight (wt%) are included herein and disclosed herein; for example the amount of the maleic acid/maleic anhydride can be from a lower limit of 0.1, 0.2, 0.3, 0.4, or 0.5 wt% to an upper limit of 2, 2.5, 3, 4, 5, 6, 7, 8, 9, or 10 wt% based on the total weight of the maleated polyethylene. For example, the amount of maleic acid/maleic anhydride is preferably from 0.2 to 5 wt%, or, more preferably, from 0.5 to 2.5 wt%.

The polyethylene of the maleated polyethylene can be a low density polyethylene (HDPE), a low density polyethylene (LDPE), a linear low density polyethylene (LLDPE), or a polyethylene plastomer. The maleated polyethylene is a maleated LDPE. In some embodiments, the maleated polyethylene is a maleated polyethylene plastomer. In some embodiments, the maleated polyethylene comprises maleic anhydride grafted polyethylene or maleic anhydride grafted polyethylene plastomer. In some embodiments, the maleated polyethylene comprises maleic anhydride grafted low density polyethylene. In some embodiments, the maleated polyethylene comprises maleic anhydride grafted polyethylene plastomer.

Examples of commercially available maleated polyethylenes that can be modified with polyalkylene ether include maleic anhydride grafted polyethylene commercially available from The Dow Chemical Company under the names AMPLIFY^{™} GR including, for example, AMPLIFY^{™} GR 202 and AMPLIFY^{™} GR 216; from DuPont under the name FUSABOND^{®} including, for example, FUSABOND M series and FUSABOND^{®} E series; from Addivant in its POLYBOND^{®}3000 series; and from Mitsui Chemical America Inc. in its ADMERseries.

As will be clear from further discussed further herein, when the polyethylene is modified with a polyalkylene ether, any functional groups on the polyethylene may also be modified. For example, with maleated polyethylenes, such as maleic anhydride grafted polyethylene, the polyethylene may no longer have a maleic moiety once modified with the polyalkylene ether. The chemical structure of the polyalkylene ether modified polyethylene will thus depend on the particular reactants used.

In some embodiments, the polyalkylene ether modified polyethylene comprises an imide moiety. An imide moiety can result when, for example, a maleated polyethylene is reacted with an amine terminated polyalkylene ether. The following reaction scheme illustrates the formation of one embodiment of a polyalkylene ether modified polyethylene that is formed when a maleic anhydride grafted polyethylene is reacted with a primary, monoamine-terminated polyalkylene ether: 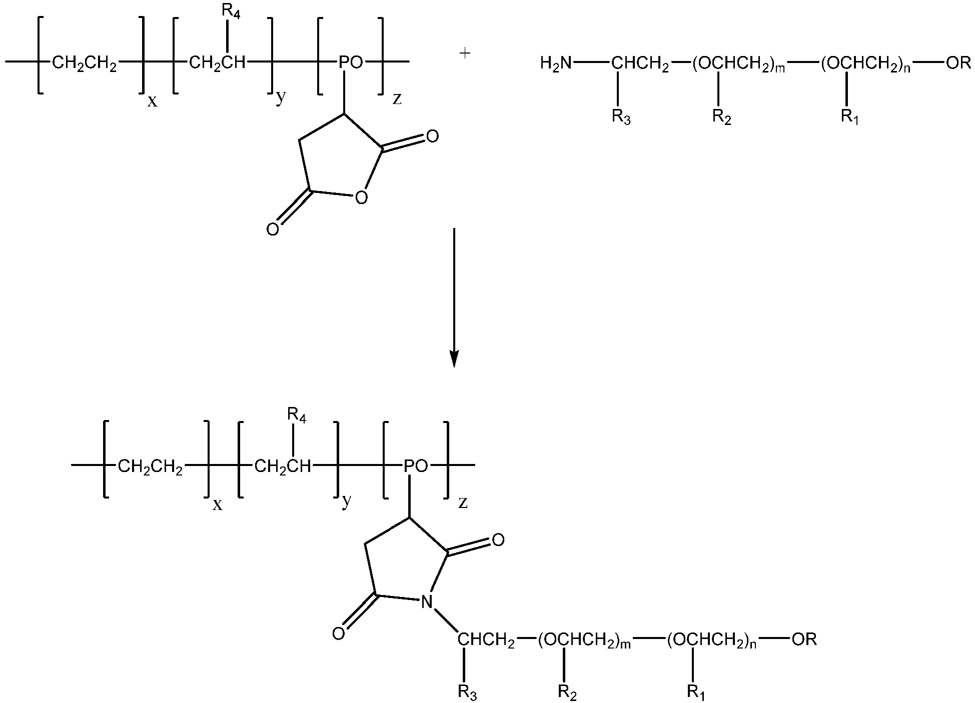 where R, R₁, R₂, R₃, and R₄ independently comprise H or alkyl, where PO represents an olefin or alpha olefin monomer repeat unit to which maleic anhydride had been grafted, where x +y + z = 100 mole %, and where n + m = 100 mole %. The reactivity of a primary amine with maleated olefin is fast and efficient with the anhydride being completely consumed and converted to an imide moiety as shown above.

As indicated in the above reaction scheme, in some embodiments, the polyalkylene ether modified polyethylene used to form packages of the present invention can be the reaction product of a maleated polyethylene with an amine-terminated polyalkylene ether. In such embodiments, the amine-terminated polyalkylene ether can be a homopolymer, a random copolymer, a block copolymer, or a segmented copolymer of hydrophilic polyalkylene oxides. Examples of such polyalkylene oxides can include polyethylene oxide, polyethylene glycol, or combinations thereof. Other examples of polyalkylene oxides that can be part of amine-terminated polyalkylene ethers include polypropylene oxide, polybutylene oxide, polytetramethylene oxide, as well as higher alkylene oxides, and combinations thereof. In some preferred embodiments, the majority (if not all) of the alkylene oxide in the amine-terminated polyalkylene ether is derived from or equivalent to ethylene oxide. In some embodiments, the amine-terminated polyalkylene ether is an ethylene oxide rich polyalkylene ether such that at least 50 mole % of the polyalkylene ether comprises ethylene oxide based repeat units/moieties. In some embodiments, the amine-terminated polyalkylene ether comprises at least 75 mole % ethylene oxide based repeat units/moieties. In some embodiments, the amine-terminated polyalkylene ether is a propylene oxide rich polyalkylene ether such that at least 50% of the polyalkylene ether comprises propylene oxide based repeat units/moieties. In some embodiments, the amine-terminated polyalkylene ether comprises at least 75 mole % propylene oxide based repeat units/moieties.

The amine terminated polyalkylene ether can be a monoamine terminated or polyamine terminated in various embodiments, but is preferably monoamine terminated.

Amine terminated polyalkylene ethers useful in forming some embodiments of polyalkylene ether modified polyethylenes comprise the structure: 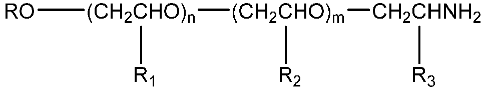 wherein R, R₁,R₂, and R₃ independently comprise H or an alkyl group and wherein n + m = 100 mole %. In some preferred embodiments of the above monoamine terminated polyalkylene ether, both R and R₂ are independently alkyl groups and R₁ is H, and n is at least 50 mole %, and more preferably at least 75 mole %. In some embodiments when R₁ is not the same as R₂, the polyalkylene ether is a copolymer and the copolymer can be either a random copolymer, a block copolymer, or a segmented copolymer (including their mixtures). In some such embodiments of the above monoamine terminated polyalkylene ether, R₁ is H, R2 is an alkyl group, and n is at least 50 mole %.

The molecular weight (Mn) of the amine-terminated polyalkylene ether can range from 250 to 15,000. Preferably, the molecular weight (Mn) of the amine-terminated polyalkylene ether is from 400 to 10,000, more preferably, from about 600 to 5,000, and most preferably from about 750 to 3,000.

In embodiments where an amine terminated polyalkylene ether is reacted with a maleated polyethylene, the molar ratio of amine in the amine terminated polyalkylene ether to the maleic anhydride/maleic acid on/in the polyethylene can range from 0.05 to 5. All individual values and subranges from 0.05 to 5 are included herein and disclosed herein; for example, the molar ratio of amine to maleic anhydride/maleic acid can be from a lower limit of 0.05, 0.1, 0.2, 0.3, 0.4, or 0.5 to an upper limit of 1, 1.5, 2, 2.5, 3, 3.5, 4, 4.5, or 5. For example, the molar ratio of amine to maleic anhydride/maleic acid is preferably from 0.2 to 2.5, or, more preferably, from 0.5 to 1.5. In some embodiments, the molar ratio of amine to maleic anhydride/maleic acid is less than or equal to 1.0.

Examples of commercially available amine terminated polyalkylene ethers that can be reacted with maleated polyethylenes to provide polyalkylene ether modified polyethylenes for use in some embodiments of packages of the present invention include primary, monoamine-terminated polyalkylene ethers commercially available from Huntsman Corporation as part of its JEFFAMINE M series such as the following:

| | Propylene oxide/Ethylene oxide (mole/mole) | Mₙ | Amine Hydrogen Equivalent Weight | Density, g/mL | Melting point, °C |
|---|---|---|---|---|---|
| JEFFAMINE M-600 | 9/1 | -600 | 291 | 0.979 | -40 |
| JEFFAMINE M-1000 | 3/19 | -1,000 | 489 | 1.066 | 29 |
| JEFFAMINE M-2005 | 29/6 | -2,000 | 1045 | 1.000 | -36 |
| JEFFAMINE M-2070 | 10/31 | -2,000 | 1040 | 1.072 | 17 |
| JEFFAMINE M-2095 | Not available | -2000 | -1000 | 1.100 | 45 |
| JEFFAMINE M-3085 | 8/58 | -3000 | -1500 | 1.000 | 36 |

As set forth in the examples, polyalkylene ether modified polyalkylene for use in some embodiments of the present invention can be prepared by both solution and melt processes. For example, temperatures for melt reacting maleated polyethylenes (e.g., maleic anhydride grafted polyethylene) with amine-terminated polyalkylene ethers range from just above the melting point of the polyethylene to just below its degradation temperature-e.g., from 140° C to 300° C, preferably from 160° C to 260° C, and more preferably from 180° C to 240° C. In connection with the solution reaction of maleated polyethylenes (e.g., maleic anhydride grafted polyethylene) with amine-terminated polyalkylene ethers, any solvent can be used that sufficiently dissolves each component for reaction and dissolution to occur. Examples of preferred solvents include toluene and xylene isomers with reaction temperatures ranging from 60° C to the boiling point of the solvent.

Examples of polyalkylene ether modified polyethylenes that can be used to form packages according to some embodiments of the present invention include: 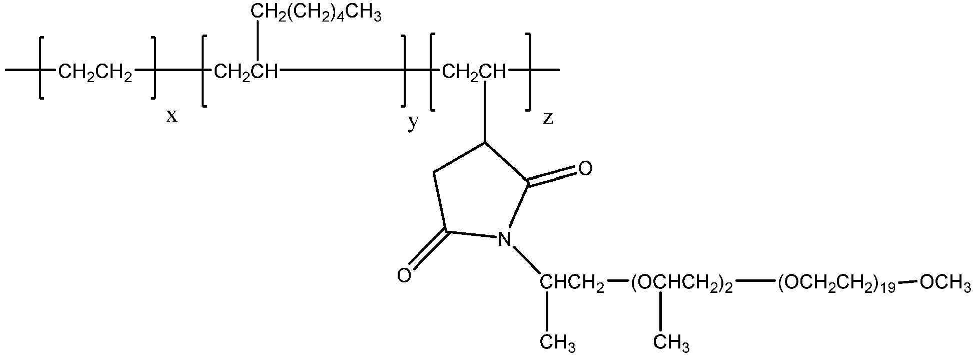 where x +y + z = 100 weight mole %. The above structure illustrates an embodiment where a linear low density polyethylene (utilizing octene as a comonomer) is radically grafted with maleic anhydride, and then reacted with a polyalklylene ether amine.

Other examples of polyalkylene ether modified polyethylenes that can be used to form packages according to some embodiments of the present invention include:

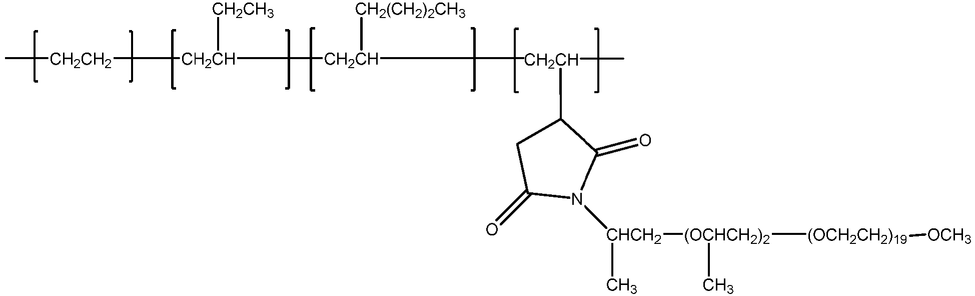

This structure illustrates an embodiment where a low density polyethylene (LDPE) is radically grafted with maleic anhydride and then reacted with a polyalkylene ether amine. In this structure, butyl and ethyl branches are shown on the LDPE backbone for exemplary purposes, and persons of skill in the art will recognize that a variety of alkyl branches can be part of a typical LDPE structure. Further, the total amount of monomer units in this structure equal 100 mole %, and none of the repeat units would be zero mole % (i.e., at least some amount of each unit is present), in one embodiment.

The package is a multilayer structure and the polyalkylene ether modified polyolefin is incorporated at least into the inner layer (i.e., the layer that would contact the product to be contained in the package).

The inner layer comprises at least 30% by weight polyalkylene ether modified polyethylene based on the weight of the inner layer. All individual values and subranges from 30 percent to 100 percent by weight (wt%) are included herein and disclosed herein; for example the amount of the polyalkylene ether modified polyolefin can be from a lower limit of 30, 35, 40, 45, or 50 wt% to an upper limit of 40, 45, 50, 55, 60, 65, 70, 75, 80, 85, 90, 95, or 100 wt% based on the total weight of the inner layer. For example, the amount of polyalkylene ether modified polyethylene can be from 50 to 90 wt% in some embodiments.

In some embodiments, the polyalkylene ether modified polyethylene can be blended in the inner layer with an ethylene-based polymer. In such embodiments, the inner layer comprises at least 5% by weight ethylene-based polymer and up to 70% by weight ethylene-based polymer based on the weight of the inner layer. All individual values and subranges from 5 to 70 percent by weight (wt%) are included herein and disclosed herein; for example the amount of the ethylene-based polymer can be from a lower limit of 5, 10, 15, 20, or 25 wt% to an upper limit of 30, 35, 40, 45, 50, 55, 60, 65, or 70 wt% based on the total weight of the inner layer. For example, the amount of ethylene-based polymer can be from 10 to 50 wt% in some embodiments. Exemplary ethylene-based polymers for use in the inner product facing layer include DOWLEX, ELITE and ENGAGE, all of which are commercially available from The Dow Chemical Company (Midland, MI, USA) and EXCEED, which is commercially available from ExxonMobil Chemical Corporation (Baytown, TX, USA).

In some embodiments, the inner layer comprises one or more low density polyethylene polymers (LLDPE or LDPE or VLDPE). In some embodiments, when the polyalkylene ether modified polyethylene is formed from the reaction of an amine-terminated polyalkylene ether and a maleated LLDPE, the inner layer can further comprise an LLDPE. Any LLDPE, such as described in U.S. Patents 5,272,236 and 5,278,272 may be used in such embodiments.

It should be understood that the inner layer can further comprise one or more additives as known to those of skill in the art such as, for example, antioxidants, ultraviolet light stabilizers, thermal stabilizers, slip agents, antiblock, pigments or colorants, processing aids, crosslinking catalysts, flame retardants, fillers and foaming agents.

While packages of the present invention comprise an inner surface comprising polyalkylene ether modified polyethylene, it should be understood that the remainder of the package can be formed using techniques known to those of skill in the art based on the desired size of the package, the desired shape of the package, the manufacturing technique used to form the package, compatibility with an inner surface or inner layer comprising functionalized polyolefin, the desired properties of the package, the product to be contained in the package, and other factors.

According to embodiments of packages wherein the package comprises a multilayer structure, the thickness of the inner layer comprising polyalkylene ether oxide can be from 5 to 50% of the total thickness of the multilayer structure. All individual values and subranges from 5 to 50 % are included and disclosed herein; for example the thickness of the inner layer facing layer can range from a lower limit of 5, 15, 30, or 45 % of the total thickness of multilayer structure to an upper limit of 10, 20, 35 or 50 % of the total thickness of multilayer structure. For example, the thickness of the inner layer may be from 5 to 50% of the total multilayer structure thickness, or in the alternative, from 5 to 30%, or in the alternative, from 25 to 50%, or in the alternative, from 15 to 45%. The percentage thickness of the package contributed by the inner layer is a function of, inter alia, the intended use of the package and the product to be contained.

In some embodiments, the inner product facing surface has a small scale root mean square roughness of equal to or less than 40 nm. All individual values and subranges from equal to or less than 40 nm are included and disclosed herein. For example, the small scale root mean square roughness can be equal to or less than 40 nm, or in the alternative, equal to or less than 35 nm, or in the alternative, equal to or less than 30 nm, or in the alternative, equal to or less than 25 nm. In a particular embodiment, the small scale root mean square roughness is equal to or greater than 1 nm. All individual values and subranges from equal to or greater than 1 nm are included and disclosed herein. For example, the small scale root mean square roughness may be equal to or greater than 1 nm, or in the alternative, equal to or greater than 5 nm, or in the alternative, equal to or greater than 10 nm, or in the alternative, equal to or greater than 15 nm.

In certain embodiments, the inner product facing surface has a large scale root mean square roughness of equal to or less than 500 nm. All individual values and subranges of equal to or less than 500 nm are included and disclosed herein. For example, the large scale root mean square roughness of the inner product facing layer can be equal to less than 500 nm, or in the alternative, equal to less than 450 nm, or in the alternative, equal to less than 400 nm, or in the alternative, equal to less than 350 nm.

Packages of the present invention generally include any type of container configured to hold complex fluids. Such packages are typically multilayer structures that can be prepared by blow molding (e.g., continuous blow molding, reciprocating blow molding, accumulator blow molding, sequential blow molding, injection blow molding, stretch blow molding), injection molding, compression molding, rotomolding, multilayer molding/extrusion processes, inject-over-inject molding processes, coextrusion, thermoforming, lamination, and others.

Packages of the present invention can be used to contain a variety of products. In particular, packages of the present invention are particularly well-suited for containing complex fluids for which improved release from the package is desired. As noted above, a "complex fluid" is a fluid having a yield stress of at least 5 Pa and a viscosity of at least 10 Pa·s at a strain rate of 1 s⁻¹, when measured using the procedure described above. Examples of such complex fluids include, without limitation, personal care products (e.g., lotions, shampoos, body wash, etc.), consumer goods, food (e.g., salad dressing), pet food (e.g., soft dog or cat food), and other products.

In some embodiments, packages of the present invention exhibit less product retention than a comparative package of the same size and shape when the comparative package does not include polyalkylene ether modified polyolefin on its inner surface. In other words, product within packages according to some embodiments of the present invention can more readily release from the inner surface (and thus, the package itself) than from comparative package.

Some embodiments of the invention will now be described in detail in the following Examples.

### Examples

### Example 1

### Melt Extrusion Synthesis of Polyalklylene Ether Modified Polyethylene:

A polyalkylene ether modified polyethylene is formed using melt extrusion as follows. A Krupp Werner & Pfleiderer twin-screw co-rating extruder system (ZSK-25) is used. The system includes an extruder with 12 barrel sections, 11 of which are independently controlled with electric heating and water cooling, a loss-in weight feeder (K-Tron, model KCLQX3), a heat traced gear pump system to inject amino-terminated poly(ethylene oxide-co-propylene
oxide) liquid, and a Gala LPU underwater pelletizer. The length to diameter ratio of the extruder is 48.

The K-Tron feeder feeds maleic anhydride grafted polyethylene plastomer pellets (density = 0.875 g/cm³; I₂ = 1.3 g/10 minutes; 0.79 weight percent maleic anhydride graft level) under a nitrogen purge into the extruder feed throat (Barrel #1). A gear pump injects preheated amino-terminated poly(ethylene oxide-co-propylene oxide) (Jeffamine M-1000 from Huntsman Corporation) liquid into the 4th barrel section (Zone #3 in Table 1) of the extruder. Table 1 summarizes other process parameters associated with a typical extrusion to produce the polyalkylene ether modified polyethylene.

**Table 1**

| **Parameter** | Value |
|---|---|
| Total Feed Rate (kg/h) | 9.07 |
| Screw Speed (RPM) | 500 |
| Zone #1 - Barrel #2 (° C) | 120 |
| Zone #2 - Barrel #3 (° C) | 200 |
| Zone #3 - Barrel #4 (° C) | 220 |
| Zone #4 - Barrel #5 (° C) | 220 |
| Zone #5 - Barrel #6 (° C) | 220 |
| Zone #6 - Barrel #7 (° C) | 220 |
| Zone #7 - Barrel #8 (° C) | 210 |
| Zone #8 - Barrel #9 (° C) | 200 |
| Zone #9 - Barrel #10 (° C) | 190 |
| Zone #10 - Barrels #11 & 12 (° C) | 180 |
| Zone #11 - Adapter (° C) | 180 |

The resulting modified polymer (polyalkylene ether modified polyethylene) is pumped by the extruder through a two-hole die into the cutting chamber of the Gala LPU underwater pelletizer. The cutting speed ranges from 2800 to 3300 rpm depending on the pellet size desired. In addition, the water temperature of the pelletizing system is 4.4° C. The total feed rate (6.80 kg/h) and screw speed (500 rpm) is held constant for all samples. The extruder torque load varies from 60-78 %. The polyalkylene ether modified polyethylene pellets are used to produce coextruded blow molded bottles as described below.

Coextruded blow molded bottles are produced on a BEKUM BM-502S commercial blow molding line. A BEKUM BM-502S unit is used to coextrude a three-layer A/B/C blow molded structure (A= inner product facing layer, B= core layer and C= outer layer). The BM-502S is composed of two 38 mm diameter single-screw extruders for outer and inner skin materials and one 60 mm diameter single-screw extruder for a core layer. It has a multi-manifold coextrusion blow molding head where individual layers are formed separately and merged together before the exit of annular die. Materials are extruded at 6.8 kg/h at 188 °C into a tubular parison through a converging die tool with an annular opening between a die bushing, Ø 17.8 mm × 20° and a die pin (Ø 14.0 mm × 15°). Extruded parisons are blow molded with pressurized air at 0.41 MPa (4.1 bar) for 13 s into 0.89 mm thick wall, 19.9 cm tall, Ø 5.9 cm, 414 ml Boston Round bottles. Core Layer B and outer Layer C are kept constant and are formed from a bimodal high density polyethylene having a density of 0.958 g/cm³ and a melt index (I₂) of 0.28 g/10 min at 190 °C/2.16 kg.

The inner product facing layer is Layer A and has a thickness that is 10% of the total thickness of the wall (Layers B and C combine to provide the remaining 90% of the wall thickness). In Comparative Bottle A, the inner product facing layer (Layer A) is formed from the same resin as Layers B and C. In Inventive Bottle 1, the inner product facing layer (Layer A) is formed from the pellets of polyalkylene ether modified polyethylene that were prepared as described above.

The Bottles are evaluated for product release performance using the following protocol:
1) Weigh the empty bottle without cap to get a tare weight.
2) Fill the blow molded bottle to ~70% of its volume capacity with body wash.
The body wash has a viscosity of 72 Pa·s at a strain rate of 1 s⁻¹, when measured using the procedure described above. The body wash has a yield stress of 39 Pa.
3) Cap the bottle tightly.
4) Invert the bottle and rest it on its cap. (Time (t) = 0)
5) Record the time and wait 24 +/- 1 hour.
6) At 24 +/- 1 hour, take the cap off the bottle and squeeze it until 50% of product is dispensed. Record the weight of the bottle + remaining body wash at this point. (t=24h)
7) Recap the bottle and place it in the inverted position for 4 hours.
8) At 4 hours after half emptying (t=28h), again uncap the bottle. Squeeze, but do not shake, the bottle repeatedly until 3 successive squeezes do not remove any material. Record the weight of the bottle + remaining body wash again.
9) Recap and allow the bottle to sit for an additional 20 hours in the inverted position, for a total of 24 hours since the first emptying, and 48 hours since filling.
10) At 24 hours after the first emptying, shake the bottle and squeeze it to remove as much remaining material as possible. Alternate between three shakes and a squeeze.
Repeat this cycle until 3 successive shakes and a squeeze do not remove any body wash. (t=48h)
11) Record the final weight of the bottle + body wash. (t=48h) 5 replicates of each Bottle are measured. The results are shown in Table 2:

**Table 2**

| | Average Weight % of Body Wash Retained |
|---|---|
| Inventive Bottle 1 | 4.7% ± 1.2% |
| Comparative Bottle A | 9.1% ± 2.0% |

The data demonstrate that Inventive Bottle 1 exhibits ~50% of the product retention exhibited by Comparative Bottle A.

### Example 2

### Solution Based Synthesis of Polyalkylene Ether Modified Polyethylene:

50.0 grams of maleic anhydride grafted low density polyethylene pellets (density = 0.930 g/cm³; I₂ = 8.0 g/10 minutes; 0.89 weight percent maleic anhydride graft level) are dissolved in 495 mL of xylenes in a 3 neck 500 mL flask at 85° C. After the pellets dissolve in the xylenes to form a homogeneous solution, 4.60 mL of amino-terminated poly(ethylene oxide-co-propylene oxide) (Jeffamine M-1000 from Huntsman Corporation) is added to the solution and reacted for 18 hours. The reaction is monitored by infrared spectroscopy. When the shift of the COOH peak (1715 cm⁻¹) to maleimide (1724 cm⁻¹) is observed, the product is retrieved from solution by precipitation from acetone (3:1 ratio of acetone to xylenes) and vacuum filtration. After drying the product in vacuo at 40° C overnight, the product is redissolved in xylenes (500 mL) at 100° C, re-precipitated from acetone (2 L), and filtered. The product is then dried in vacuo at 40° C again and pressed into films (140° C) between Mylar sheets on a carver press at 103.4 MPa (1034 bar). The films are soxhleted in chloroform overnight to remove trace amounts of unreacted amino terminated polyethylene glycol and dried in vacuo at 40° C in a vacuum oven until a constant weight is obtained. Finally, several films are prepared for analysis by compression molding on a Tetrahedron press. These films are referred to as Inventive Film 1.

49.9 grams of maleic anhydride grafted polyethylene plastomer pellets (density = 0.875 g/cm³; I₂ = 1.3 g/10 minutes; 0.79 weight percent maleic anhydride graft level) are dissolved in 490 mL of xylenes in a 3 neck 1 L flask at 85° C. After the pellets dissolve in the xylenes to form a homogeneous solution, 4.15 mL of amino-terminated poly(ethylene oxide-co-propylene oxide) (Jeffamine M-1000 from Huntsman Corporation) is added to the solution and reacted for 18 hours. The reaction is monitored by infrared spectroscopy. When the shift of the COOH peak (1712 cm⁻¹) to maleimide (1701cm⁻¹) is observed, the product is retrieved from solution by precipitation from acetone (3:1 ratio of acetone to xylenes) and vacuum filtration. After drying the product in vacuo at 40° C overnight, the product is redissolved in xylenes (500 mL) at 100° C, re-precipitated from acetone (2L), and filtered. The product is then dried in vacuo at 40° C again and pressed into films (140° C) between Mylar sheets on a carver press at 103.4 MPa (1034 bar). The films are soxhleted in chloroform overnight to remove trace amounts of unreacted amino terminated polyethylene glycol and dried in vacuo at 40° C in a vacuum oven until a constant weight is obtained. Finally, several films are prepared for analysis by compression molding on a Tetrahedron press. These films are referred to as Inventive Film 2.

A clamp hot press with controllable temperature ramp and internal timing with water cooling control is used for melting and compressing films. Mylar sheets are cut to 25 cm × 25 cm and placed over and under the chase (dimensions 10 cm × 10 cm × 0.013 mm). Underneath and overtop of the Mylar, sheets of DuoFoil were used to negate imperfections permeating from the plates of the press. Polymer product is placed in the center of the chase, covered with Mylar and DuoFoil, and placed in the preheated press set to 145° C with no pressure applied for 3 minutes. A force of 2721 kg is applied and held for 1 minute. Then, a larger force (13,608 kg) is applied and held for 5 minutes at 145° C. After 5 minutes under high force, a cooling cycle is initiated (cooling rate of 60° C/min) with the 13,608 kg force applied. Cooling is applied until the plates reach 40° C. The press then automatically disengages the force, and the clamps open. Films are removed from the press and cooled to ambient temperature for 3 minutes before removal from the Mylar and DuoFoil sandwiched setup. The films are stored in aluminum foil until analysis.

### Example 3

### Product Evacuation (Flow Test):

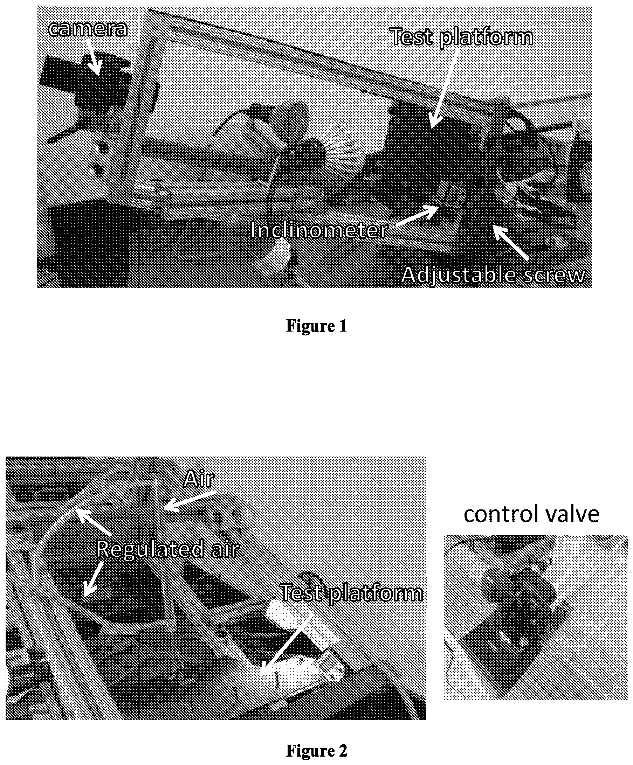

An adjustable incline plane is designed to perform complex fluid flow tests as shown in FIG. 1. A solid frame of aluminum channel is used to mount a camera with the focal plane parallel to a test platform in order to video capture complex fluid flow. A Wixey digital inclinometer accurate to 0.1° is used to ensure the angle of the test platform is correct. An air cylinder driven system is adapted to gradually change the angle of incline of the test platform. The system consists of a pressure regulated air supply, a needle valve to control flow of air into the cylinder, a double acting air cylinder, and a control valve as shown in FIG. 2. The adjustable angle of the test platform is designed to simulate the emptying of a flexible pouch containing a product.

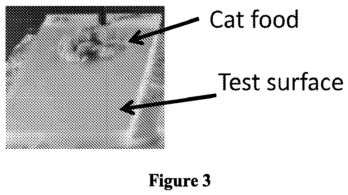

In this example, the flow of cat food (chicken chunks in gravy) on a surface (6.35 cm × 10.16 cm) is evaluated as follows:
1. 5 grams of cat food (from a master batch to eliminate product variability) is dispensed on a film on the test platform in the flat position (0° incline, horizontal position). The cat food is dispensed on one end of the test platform so that the cat food slides down about 7.62 cm along the long axis (see FIG. 3). The starting position of the cat food on the test surface is monitored to make sure that the cat food slides through the same distance before falling off the test surface.
2. The air cylinder system is used to gradually change the angle of inclination from 0° (horizontal orientation) to 90° (vertical orientation) in ~5 seconds.
3. The test platform rests at 90° (vertical orientation) for 10 seconds.
4. The test platform is returned to 0° (horizontal orientation) from 90° (vertical orientation) in ~5 seconds.
5. The weight of the cat food retained on the film surface is measured. A film that retains less cat food than a comparative film can be said to exhibit better product release (or less product retention).

Three films are evaluated for cat food retention. Comparative Film A is formed from the maleic anhydride grafted low density polyethylene pellets (density = 0.930 g/cm³; I₂ = 8.0 g/10 minutes; 0.89 weight percent maleic anhydride graft level) that were used to form Inventive Film 1, except the maleic anhydride grafted low density polyethylene is not reacted with amino-terminated polyethylene glycol. Comparative Film B is a commercially available laminate having an inner surface that does not include polyalkylene ether modified polyethylene. The third film is Inventive Film 1. Each film is measured for cat food retention 3times, and the average values are determined. The results are summarized in Table 3:

**Table 3**

| Film | Weight % of Cat Food Retained |
|---|---|
| Inventive Film 1 | 14% ± 2% |
| Comparative Film A | 29% ± 4% |
| Comparative Film B | 25% ± 1% |

Inventive Film 1 is statistically different from Comparative Film A and Comparative Film B, and shows a substantial reduction in cat food retention. Inventive Film 1 comprises an inner surface having a polyalkylene ether modified polyethylene, whereas Comparative Films A and
B do not. These results are surprising and indicate that polyalkylene ether functionalization of the polyethylene reduces the interaction between the cat food and the polyethylene surface.

### Example 4

Two additional films are evaluated for cat food retention using the Product Evacuation (Flow Test) described above. Comparative Film C is formed from the maleic anhydride grafted polyethylene plastomer pellets (density = 0.875 g/cm³; I₂ = 1.3 g/10 minutes; 0.79 weight percent maleic anhydride graft level) that were used to form Inventive Film 2, except the maleic anhydride grafted polyethylene plastomer is not reacted with amino-terminated polyethylene glycol. The third film is Inventive Film 2. Each film is measured for cat food retention 3 times, and the average values are determined. The results (along with the prior results for Comparative Film B from Example 2) are summarized in Table 4:

**Table 4**

| Film | Weight % of Cat Food Retained |
|---|---|
| Inventive Film 2 | 9% ± 2% |
| Comparative Film B | 25% ± 1% |
| Comparative Film C | 25% ± 2% |

Inventive Film 2 is statistically different from Comparative Film B and Comparative Film C, and shows a substantial reduction in cat food retention. Inventive Film 2 comprises an inner surface having a polyalkylene ether modified polyethylene, whereas Comparative Films B and C do not. These results are surprising and indicate that polyalkylene ether functionalization of the polyethylene reduces the interaction between the cat food and the polyethylene surface.

### Example 5

In this example, four compression molded plaques are evaluated for product retention in connection with a personal care product (body wash).

The plaques are prepared by compression molding pellets as follows. The frames (chases) used are either 20.32 cm × 25.4 cm × 0.051 cm or 15.24 cm × 20.32 cm × 0.064 cm. Polyethylene terephthalate film having a thickness of 0.051 cm and a width of 20.32 cm is used as a release film. It is backed with a disposable aluminum slip sheet that is in turn backed with a 0.3175 cm thick steel plate. This configuration resulted in smooth surface finish of the plagues while providing rigid backing. Comparative Plaque A is compression molded at 190° C, while each of the other plaques are compression molded at 210° C. The molding cycle for each of the plaques is as follows: (a) 7 minute hold time at low pressure (~ 0.034 MPa (0.34 bar) for an 20.32 cm × 25.4 cm frame); (b) 5 minute hold time at high pressure (~ 1.31 MPa (13.1
bar) for an 20.32 cm × 25.4 cm frame); and (c) Hold at high pressure and cool using water jacketed mold platens. Cooling takes -10 minutes to reach 30° C from a starting temperature of ~200° C. The plaque is then de-molded, and allowed to sit for -24 hours at room temperature/humidity before testing.

Comparative Plaque A is formed from pellets of a non-functionalized random polyethylene copolymer having a density of 0.87 g/cm³ and a melt index (I₂) of 5 g/10 minutes. Comparative Plaque B is formed from maleic anhydride grafted polyethylene plastomer pellets (density = 0.875 g/cm³; I₂ = 1.3 g/10 minutes; 0.79 weight percent maleic anhydride graft level). Comparative Plaque C is formed from pellets of a high density polyethylene (density = 0.958 g/cm³; I₂ = 0.28 g/10 minutes). Inventive Plaque 1 is formed from the same polymer used to form Inventive Film 2 above.

In this example, the flow of body wash on a surface (6.35 cm × 10.16 cm ((2.5 inches × 4 inches)) is evaluated as follows:
1. 5 grams of body wash (from a master batch to eliminate product variability) is dispensed on a plaque on the test platform (same test platform as used in connection with Examples 2 and 3) in the flat position (0° incline, horizontal position). The body wash is dispensed on one end of the test platform.
2. The air cylinder system is used to gradually change the angle of inclination from 0° (horizontal orientation) to 70°. The body wash begins to start sliding down the surface.
3. After the front end of the body wash slips off the edge of the test platform, the angle of inclination is changed from 70° to 90°. At this point of the test, a thin film of the body wash is usually observed.
4. The 90° (vertical orientation) is maintained for one hour. Weight measurements are made to calculate the amount of body wash (%) retained on the test surface.

Each plaque is measured for body wash retention 3 times, and the average values are determined. The results are summarized in Table 5:

**Table 5**

| Plaque | Weight % of Bodv Wash Retained |
|---|---|
| Inventive Plaque 1 | 10% ± 1% |
| Comparative Plaque A | 16% ± 4% |
| Comparative Plaque B | 60% ± 4% |
| Comparative Plaque C | 62% ± 6% |

The body wash retention results indicate that Inventive Plaque 1 comprising an inner surface with a polyalkylene ether modified polyethylene reduces product retention with respect to the non-functionalized alpha olefin random copolymer (Comparative Plaque A). Inventive Plaque 1 also exhibits significantly lower weight retention with respect to the Comparative Plaques B and C (-80% improvement). These results suggest that polyethylenes can be modified with polyalkylene ethers to reduce product weight retention and can be used as inner layers in packages to improve product release.

## Claims

1. A package comprising:
a multilayer structure having an inner layer comprising an inner surface, wherein the inner layer comprises a polyalkylene ether modified polyethylene wherein the inner layer comprises at least 30% by weight of the polyalkylene ether modified polyethylene based on the weight of the inner layer.

2. The package of claim 1, wherein the polyalkylene ether modified polyethylene comprises an imide moiety.

3. The package of claim 1 or claim 2, wherein the polyalkylene ether modified polyethylene is the reaction product of a maleated polyethylene and an amine terminated polyalkylene ether.

4. The package of claim 3, wherein the maleated polyethylene comprises a maleic anhydride grafted polyethylene.

5. The package of claim 3, wherein the maleated polyethylene comprises a copolymer comprising ethylene and maleic anhydride.

6. The package of any one of claims 3-5, wherein the maleated polyethylene comprises up to 10 weight percent maleic anhydride based on the weight of maleated polyethylene.

7. The package of any one of claims 3-6, wherein the amine terminated polyalkylene ether is a monoamine terminated polyalkylene ether.

8. The package of any one of claims 3-7, wherein the molecular weight (Mn) of the amine terminated polyalkylene ether is between 250 and 15,000.

9. The package of any of claims 3-8, wherein the molar ratio of amine in the amine terminated polyalkylene ether to the maleic anhydride or maleic acid in the maleated polyethylene is 0.05 to 5.

10. The package of any of claims 1-9, wherein the polyalkylene ether modified polyethylene comprises the following compound: 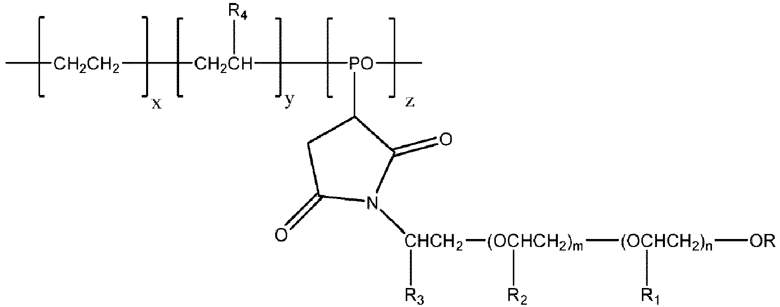 where R, R₁, R₂, R₃, and R₄ independently comprise H or alkyl, where PO represents an olefin or alpha olefin monomer repeat unit, where x +y + z = 100 mole %, and where n + m = 100 mole %.

11. The package of any of claims 1-9, wherein the polyalkylene ether modified polyethylene comprises the following compound: 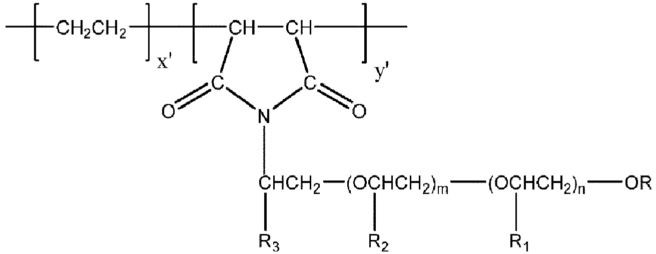 where R, R₁, R₂, and R₃ independently comprise H or alkyl, where x' +y' = 100 mole %, and where n + m = 100 mole %.

12. The package of any of claims 1 to 11 wherein the package comprises an interior volume, and further comprising a flowable product in the interior volume, wherein the flowable product is a complex fluid, a food product, or a personal care product, and wherein a complex fluid is a fluid having a yield stress of at least 5 Pa and a viscosity of at least 10 Pa.s at a strain rate of 1 s⁻¹, when determined according to the method provided in the description.

## Patentansprüche

1. Verpackung, umfassend:
eine mehrschichtige Struktur, die eine Innenschicht aufweist, umfassend eine Innenoberfläche, wobei die Innenschicht ein Polyalkylenether-modifiziertes Polyethylen umfasst, wobei die Innenschicht mindestens 30 Gew.-% des Polyalkylenether-modifizierten Polyethylens basierend auf dem Gewicht der Innenschicht umfasst.

2. Verpackung nach Anspruch 1, wobei das Polyalkylenether-modifizierte Polyethylen einen Imidmolekülteil umfasst.

3. Verpackung nach Anspruch 1 oder 2, wobei das Polyalkylenether-modifizierte Polyethylen das Reaktionsprodukt eines maleinierten Polyethylens und eines Amin-terminierten Polyalkylenethers ist.

4. Verpackung nach Anspruch 3, wobei das maleinierte Polyethylen ein Maleinsäureanhydrid-gepfropftes Polyethylen umfasst.

5. Verpackung nach Anspruch 3, wobei das maleinierte Polyethylen ein Copolymer umfasst, umfassend Ethylen und Maleinsäureanhydrid.

6. Verpackung nach einem der Ansprüche 3 bis 5, wobei das maleinierte Polyethylen bis zu 10 Gew.-% Maleinsäureanhydrid basierend auf dem Gewicht von maleiniertem Polyethylen umfasst.

7. Verpackung nach einem der Ansprüche 3 bis 6, wobei der Amin-terminierte Polyalkylenether ein Monoamin-terminierter Polyalkylenether ist.

8. Verpackung nach einem der Ansprüche 3 bis 7, wobei das Molekulargewicht (molecular weight - Mn) des Amin-terminierten Polyalkylenethers zwischen 250 und 15.000 liegt.

9. Verpackung nach einem der Ansprüche 3 bis 8, wobei das molare Verhältnis von Amin in dem Amin-terminierten Polyalkylenether zu dem Maleinsäureanhydrid oder der Maleinsäure in dem maleinierten Polyethylen 0,05 bis 5 beträgt.

10. Verpackung nach einem der Ansprüche 1 bis 9, wobei das Polyalkylenether-modifizierte Polyethylen die folgende Verbindung umfasst: 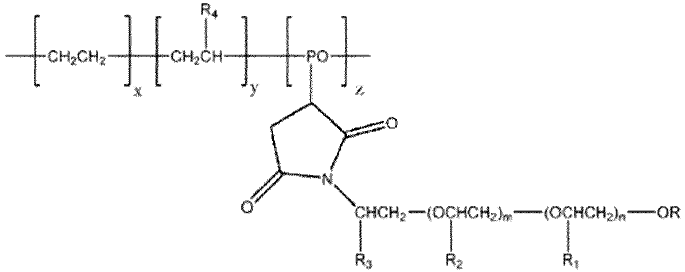 wobei R, R₁, R₂, R₃, und R₄ unabhängig H oder Alkyl umfassen, wobei PO eine Olefin- oder alpha-Olefin-Monomerwiederholungseinheit darstellt, wobei x + y + z = 100 Mol- % ist und wobei n + m = 100 Mol- % ist.

11. Verpackung nach einem der Ansprüche 1 bis 9, wobei das Polyalkylenether-modifizierte Polyethylen die folgende Verbindung umfasst: 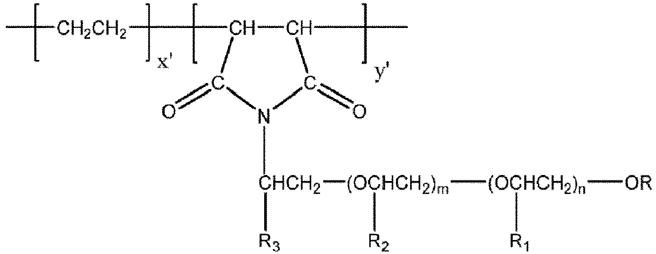 wobei R, R₁, R₂, und R₃ unabhängig H oder Alkyl umfassen, wobei x' + y' = 100 Mol- % und wobei n + m = 100 Mol- % ist.

12. Verpackung nach einem der Ansprüche 1 bis 11, wobei die Verpackung ein Innenvolumen umfasst und ferner umfassend ein fließfähiges Erzeugnis in dem Innenvolumen, wobei das fließfähige Erzeugnis ein komplexes Fluid, ein Lebensmittelprodukt oder ein Körperpflegeprodukt ist, und wobei ein komplexes Fluid ein Fluid ist, das eine Streckgrenze von mindestens 5 Pa und eine Viskosität von mindestens 10 Pa.s bei einer Dehngeschwindigkeit von 1 s⁻¹ aufweist, wenn gemäß dem in der Beschreibung bereitgestellten Verfahren bestimmt.

## Revendications

1. Conditionnement comprenant :
une structure multicouche ayant une couche interne comprenant une surface interne, dans lequel la couche interne comprend un polyéthylène à modification polyalkylène éther dans lequel la couche interne comprend au moins 30 % en poids du polyéthylène à modification polyalkylène éther sur la base du poids de la couche interne.

2. Conditionnement selon la revendication 1, dans lequel le polyéthylène à modification polyalkylène éther comprend un fragment imide.

3. Conditionnement selon la revendication 1 ou la revendication 2, dans lequel le polyéthylène à modification polyalkylène éther est le produit de réaction d'un polyéthylène maléaté et d'un polyalkylène éther à terminaison amine.

4. Conditionnement selon la revendication 3, dans lequel le polyéthylène maléaté comprend un polyéthylène greffé par anhydride maléique.

5. Conditionnement selon la revendication 3, dans lequel le polyéthylène maléaté comprend un copolymère comprenant de l'éthylène et de l'anhydride maléique.

6. Conditionnement selon l'une quelconque des revendications 3 à 5, dans lequel le polyéthylène maléaté comprend jusqu'à 10 pour cent en poids d'anhydride maléique sur la base du poids de polyéthylène maléaté.

7. Conditionnement selon l'une quelconque des revendications 3 à 6, dans lequel le polyalkylène éther à terminaison amine est un polyalkylène éther à terminaison monoamine.

8. Conditionnement selon l'une quelconque des revendications 3 à 7, dans lequel la masse moléculaire (Mn) du polyalkylène éther à terminaison amine est comprise entre 250 et 15 000.

9. Conditionnement selon l'une quelconque des revendications 3 à 8, dans lequel le rapport molaire de l'amine dans le polyalkylène éther à terminaison amine à l'anhydride maléique ou acide maléique dans le polyéthylène maléaté va de 0,05 à 5.

10. Conditionnement selon l'une quelconque des revendications 1 à 9, dans lequel le polyéthylène à modification polyalkylène éther comprend le composé suivant : 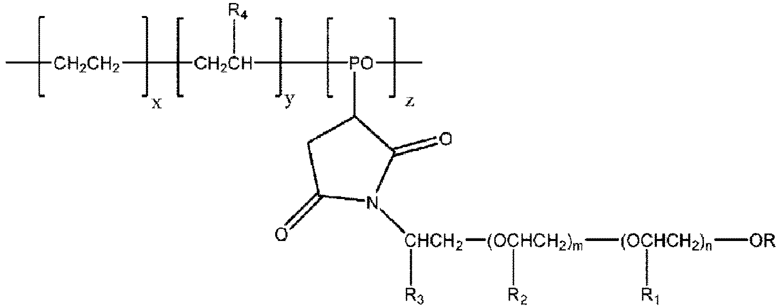 où R, R₁, R₂, R₃, et R₄ comprennent indépendamment H ou alkyle, où PO représente un motif répétitif monomère oléfinique ou alpha-oléfinique, où x +y + z = 100 % molaires, et où n + m = 100 % molaires.

11. Conditionnement selon l'une quelconque des revendications 1 à 9, dans lequel le polyéthylène à modification polyalkylène éther comprend le composé suivant : 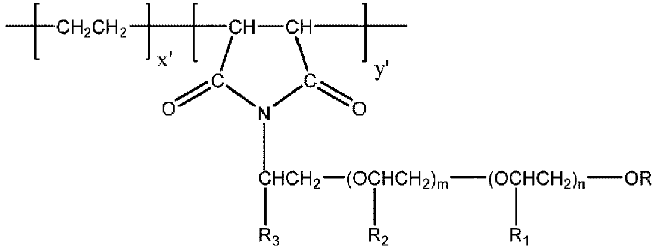 où R, R₁, R₂, et R₃ comprennent indépendamment H ou alkyle, où x' +y' = 100 % molaires, et où n + m = 100 % molaires.

12. Conditionnement selon l'une quelconque des revendications 1 à 11 dans lequel le conditionnement comprend un volume intérieur, et comprenant en outre un produit pouvant s'écouler dans le volume intérieur, dans lequel le produit pouvant s'écouler est un fluide complexe, un produit alimentaire, ou un produit de soins personnels, et dans lequel un fluide complexe est un fluide ayant une limite d'élasticité d'au moins 5 Pa et une viscosité d'au moins 10 Pa.s à une vitesse de déformation de 1 s⁻¹, lorsqu'on détermine selon le procédé fourni dans la description.
